# EUROPEAN PATENT SPECIFICATION

(11) **EP 2 879 357 B1**
(45) Date of publication and mention of the grant of the patent: **18.04.2018**
(21) Application number: 14195384.4
(22) Date of filing: 28.11.2014
(51) Int. Cl.: H04L 12/437, H04L 29/14, H04L 12/24, H04L 12/707, H04L 12/26, G06F 11/07, E21B 47/12

(54) **ACTIVE BYPASS SYSTEM FOR RING NETWORKS**
AKTIVES BYPASSSYSTEM FÜR RINGNETZWERKE
SYSTÈME DE DÉRIVATION ACTIVE POUR DES RÉSEAUX EN ANNEAU

(30) Priority: 29.11.2013 GB 201321079
(43) Date of publication of application: 03.06.2015
(73) Proprietor: GE Oil & Gas UK Limited, Nailsea Bristol BS48 1BS (GB)
(72) Inventor: Stone, Matthew Edmund, Nailsea, Somerset BS48 1BS (GB)
(74) Representative: Illingworth-Law, William Illingworth

(56) References cited:
- EP-A1- 1 612 973
- WO-A2-00/29717
- US-A- 6 147 967
- US-B1- 6 199 174
- BREWER S T ET AL: "Repeaters and equalizers for the SD submarine cable system", BELL SYSTEM TECHNICAL JOURNAL, AT AND T, SHORT HILLS, NY, US, vol. 43, no. 4, 1 July 1964 (1964-07-01), pages 1243-1273, XP011632442, ISSN: 0005-8580, DOI: 10.1002/J.1538-7305.1964.TB04082.X [retrieved on 2014-03-16]

## Description

### FIELD OF THE INVENTION

This invention relates to an active bypass system, a method for transmitting data, and a ring network, for example in an underwater, e.g. subsea, hydrocarbon well facility.

### BACKGROUND OF THE INVENTION

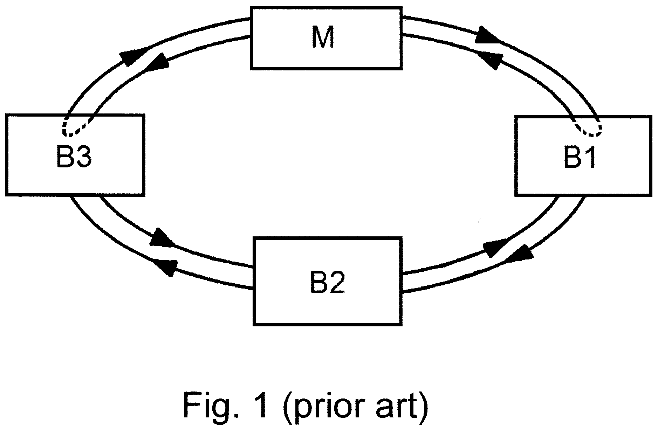

Existing self-healing technologies take advantage of two rings to create a loop-back at the adjacent nodes when a failure is encountered. A prior art ring network of this type is shown in Figure 1.

In normal operation, data is sent from the master M to the slave nodes B1, B2, and B3 using a primary (outer) ring and a secondary (inner) ring. If a slave node fails, the slave nodes upstream and downstream of the failed node reroute data automatically, and data continues to circulate through the network. In Figure 1, the dotted lines show how the data would be rerouted in the event of a failure of slave node B2.

However, in subsea systems, when copper is at a premium due to the offsets involved, this can be a very expensive solution.

It is an aim of the present invention to provide a self-healing architecture which only requires a single ring (i.e. half the copper). In accordance with the invention, this is achieved by using a single ring network having a number of active bypass system modules, each having a repeater therein. Each repeater is connected to a respective slave node. During normal operation the active bypass system module passes the ring message into the slave node, and then forwards the slave node's response to the next active bypass system module.

If a slave fails, the active bypass system module forwards the receive message directly onto the next active bypass system module, effectively "hopping" the failed slave. This system is designed to recover from the failure of a slave, not a break in the ring itself, as this type of failure would indicate a severe mechanical failure from which subsea ring technologies would not be able to recover from anyway (for example, a break in the umbilical, failure of a connector, severance of a communication / power cable, etc.). This system would also allow for the decommissioning / maintenance of individual slaves without the need to take the entire field offline.

### SUMMARY OF THE INVENTION

According to the present invention from one aspect, there is provided an active bypass system an active bypass system comprising: an active bypass module comprising a first receiver connected to a first transmitter and a repeater connected intermediate the first receiver and the first transmitter; and a slave node comprising a second receiver, a second transmitter and a process node connected therebetween; the first receiver being connected to the second receiver and the second transmitter being connected to the first transmitter; wherein in normal operation, the first receiver is adapted to receive data and pass said data to both the second receiver and the repeater, the data sent via the second receiver passing to the process node for processing, after which the process node is adapted to pass a response via the second transmitter to the first transmitter, and in the event of a failure of the slave node, the first receiver is adapted to receive data and pass said data directly through the repeater module to the first transmitter, thereby bypassing the slave node, the repeater comprising a watchdog adapted to monitor the functioning of the process node and to activate the repeater when it detects that the process node is not functioning.

According to the invention from a second aspect, there is provided a method of transmitting data, a method of transmitting data, the method comprising supplying data to an active bypass system, the active bypass system comprising: an active bypass module comprising a first receiver connected to a first transmitter and a repeater connected intermediate the first receiver and the first transmitter; and a slave node comprising a second receiver, a second transmitter, and a process node connected therebetween; the first receiver being connected to the second receiver and the second transmitter being connected to the first transmitter; wherein the method comprises, in normal operation, passing data received by the first receiver to both the second receiver and the repeater, the data received by the second receiver, passing to the process node for processing, passing a response from the process node to the second transmitter, and then passing the response to the first transmitter, and in the event of a failure of the slave node, passing data received by the first receiver directly through the repeater module to the first transmitter, thereby bypassing the slave node, the repeater comprising a watchdog which monitors the functioning of the process node and activates the repeater when it detects that the process node is not functioning.

The watchdog activates the repeater when it detects that the process node is not functioning. The watchdog may have a timer which is reset by a signal from the process node, the watchdog activating the repeater when the countdown elapses. In normal operation data received by the first receiver may be passed to both the second receiver and the repeater.

The system may be used in a control system for an underwater hydrocarbon well facility.

### BRIEF DESCRIPTION OF THE DRAWINGS

Fig. 1 is a schematic diagram of a prior art self-healing ring topology.
Fig. 2 is a schematic diagram of a ring network according to an embodiment of the invention.
Fig. 3 is a schematic view of an active bypass system according to an embodiment of the invention.

### DETAILED DESCRIPTION OF THE INVENTION

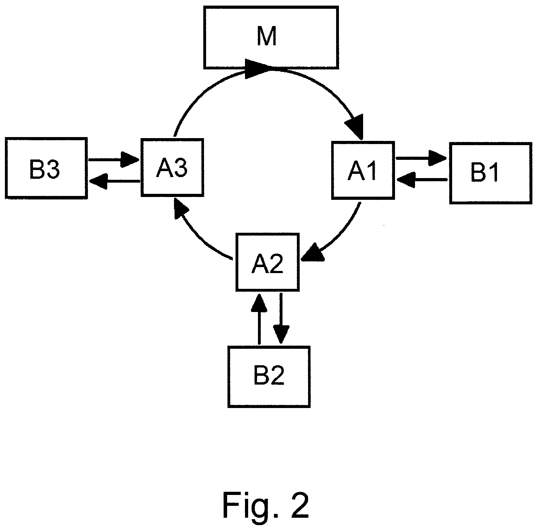

Figure 2 shows a schematic diagram of a ring network according to an embodiment of the invention. A loop is formed between a master M and three active bypass modules A1, A2, A3, which are respectively connected to slave nodes B1, B2, B3.

In this network topology all of the "active circuitry" - i.e. most likely to fail components - have been removed from the active bypass modules A1, A2, A3 that form part of the ring and placed into the lower level modules, slave nodes B1, B2, B3. This makes it feasible to have only a single line of copper running between the active bypass modules, as the active bypass modules are a fully-stressed solution designed with very simple, non-active and high reliability components (e.g. components built to a military grade specification) to have the same reliability as the cable and connectors around it. In this way, the failure point of the system, on a component failure level, has been shifted to the slave nodes B1, B2, B3. Mechanical failures, i.e. physical breaks in cables / connectors, at the ring level would knock out the system in an unrecoverable manner anyway.

In normal operation, data is fed from the master M to the first active bypass module A1 and passed to the first slave node B1 for processing, after which a response is passed back to the first active bypass module to be passed on to the next active bypass module in the loop. This process is repeated at active bypass modules A2 and A3, after which a response is passed from active bypass module A3 back to the master M.

In the event of a failure of a slave node, e.g. slave node B2, the active bypass module connected to that slave node, e.g. active bypass module A2, will detect that the slave node is not functional, and will pass the received data on to the next active bypass module in the loop automatically. This network provides a self-healing topology which can still function following the failure of a slave node, yet only requires a single ring.

Although three active bypass systems and slave nodes are shown in Figure 2, any number could be used in practice. The connection between the master and the active bypass modules could comprise a single ring of copper.

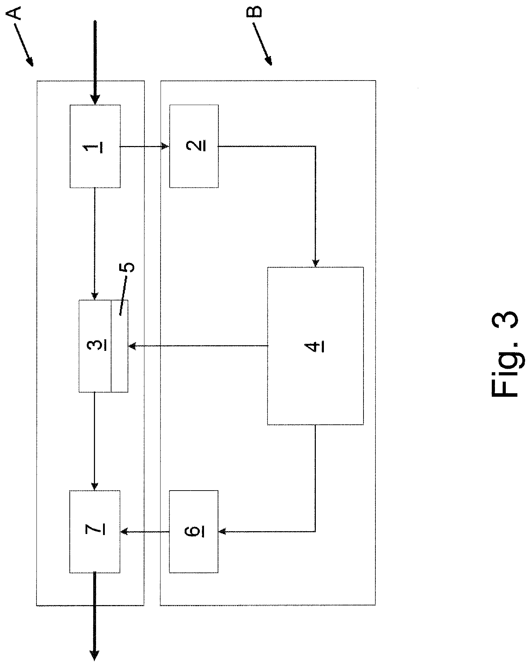

Figure 3 shows a schematic view of an active bypass system as used in the system of Fig. 2, including an active bypass module A connected to a slave node B.

The active bypass module A comprises a first receiver 1 connected to a repeater module 3, which is in turn connected to a first transmitter 7. The repeater module 3 comprises a watchdog 5.

The slave node B comprises a second receiver 2 connected to a process node 4, which is in turn connected to a second transmitter 6.

In normal operations of the slave node B (i.e. when there are no faults with the system), the active bypass system module A will receive data into a first receiver 1, typically from the mesh / ring network. The first receiver 1 has a buffer which may pass any data received to two separate systems: a second receiver 2 of the slave node B and a repeater module 3.

In normal (i.e. fault-free) operation, data received into the second receiver 2 is passed into the process node 4 of the slave node B, which performs the slave node's primary processing functions.

The watchdog 5 contains a countdown timer which independently counts down to zero. When it reaches zero it triggers the activation circuitry of the repeater module 3. In normal operation, the process node 4 resets the watchdog countdown timer every time it successfully completes an operation, verifying that it is still functional. In this way the repeater module 3 remains off for the duration of the data reception at second receiver 2, effectively discarding any data passed to the repeater module 3 from first receiver 1.

Once all data is received, the process node 4 of the slave node B processes the ring message as normal and passes its response to a second transmitter 6, which is directly connected to a first transmitter 7 of the active bypass system module A, and out to the next node in the ring network, or to the master if the node is the last in the ring (e.g. B3 as shown in Fig. 2).

In the case of a slave node failure, the data from the first receiver 1 passes directly to the repeater module 3. As the countdown timer of the watchdog 5 has not been reset by a signal from a functioning process node, the timer counts down to zero (i.e. the countdown elapses) and the watchdog 5 activates the repeater module 3, which forwards the signal to the first transmitter 7 and on to the next node (or master if the node is the last in the ring). The failed slave node B is thereby bypassed to allow the ring network to continue communicating.

Although figure 3 shows the countdown timer of the watchdog 5 being reset by the process node 4, in practice the receiver, processor and transmitter functions of the slave node B will have a single monitoring point on the slave node B. In this way, the watchdog 5 will not be reset if any of the elements of the process node B fail, i.e. the second receiver 2, the process node 4 or the second transmitter 6.

The design of the slave node modem board would be such that the watchdog 5 fundamentally monitors whether the slave node B is responding to requests through, for example, the use of a monitoring line on the integrated circuit, or through low level transmit line monitoring.

### ADVANTAGES OF USING THE INVENTION

The active bypass system is designed to allow the automatic healing of remote mesh/ring networks without user intervention, allowing the system to complete a link back to the master receiver in the case of a malfunctioning node. The system works by introducing a layer between the network node and the rest of the network.

The invention allows for a ring network to continue to operate even if only a single slave is still functional on the system: a failure localised to individual slaves does not impact the operation of the field as a whole. This system would also allow for individual nodes to be taken offline (for example, for rework, etc.) whilst the rest of the field remained active. As a topology it requires less copper than running star topology networks to each slave, and also does not have the bottleneck of a star hub: each slave can be daisy chained back to the master node without the fear of a single link in the chain (aside from physical breaks) bringing down the field.

Short offset fields can be made significantly more cost effective (no need for central communications distribution). Where ring network topology is necessitated, the entire system can be made more reliable. Ring network topology allows the use of newer point-to-point communication technologies, for example DSL. An extra node can be installed relatively simply, without the restriction of limited numbers of interfaces on star topologies.

## Claims

1. An active bypass system comprising:
an active bypass module comprising a first receiver (1) connected to a first transmitter (7) and a repeater (3) connected intermediate the first receiver and the first transmitter; and
a slave node comprising a second receiver (2), a second transmitter (6) and a process node (4) connected therebetween;
the first receiver (1) being connected to the second receiver (2) and the second transmitter (6) being connected to the first transmitter (7); wherein
in normal operation,
the first receiver (1) is adapted to receive data and pass said data to both the second receiver and the repeater, the data sent via the second receiver (2) passing to the process node (4) for processing, after which
the process node is adapted to pass a response via the second transmitter (6) to the first transmitter (7), and
in the event of a failure of the slave node,
the first receiver (1) is adapted to receive data and pass said data directly through the repeater module to the first transmitter (7), thereby bypassing the slave node,
the repeater comprising a watchdog (5) adapted to monitor the functioning of the process node and to activate the repeater when it detects that the process node is not functioning.

2. A system according to claim 1, wherein the watchdog (5) has a countdown timer which is adapted to be reset by a signal from the process node (4), the watchdog being adapted to activate the repeater (3) when the countdown elapses.

3. A system according to claim 1 or 2, wherein in normal operation the first receiver (1) is adapted to receive data and pass said data to both the second receiver (2) and the repeater (3).

4. A system according to any preceding claim used in a control system for an underwater hydrocarbon well facility.

5. A method of transmitting data, the method comprising supplying data to an active bypass system, the active bypass system comprising:
an active bypass module comprising a first receiver (1) connected to a first transmitter (7) and a repeater (3) connected intermediate the first receiver and the first transmitter; and
a slave node comprising a second receiver (2), a second transmitter (6), and a process node (4) connected therebetween;
the first receiver being connected to the second receiver and the second transmitter being connected to the first transmitter; wherein
the method comprises, in normal operation,
passing data received by the first receiver to both the second receiver and the repeater, the data received by the second receiver, passing to the process node for processing,
passing a response from the process node to the second transmitter, and then passing the response to the first transmitter, and
in the event of a failure of the slave node,
passing data received by the first receiver directly through the repeater module to the first transmitter, thereby bypassing the slave node,
the repeater comprising a watchdog (5) which monitors the functioning of the process node and activates the repeater when it detects that the process node is not functioning.

6. A method according to claim 5, wherein the watchdog (5) has a timer which is reset by a signal from the process node (4), the watchdog activating the repeater (3) when the countdown elapses.

## Patentansprüche

1. Aktives Bypass-System, umfassend:
ein aktives Bypass-Modul, umfassend einen ersten Empfänger (1), welcher mit einem ersten Sender (7) verbunden ist, und einen Verstärker (3), welcher zwischen dem ersten Empfänger und dem ersten Sender verbunden ist; und
einen Slave-Knoten, umfassend einen zweiten Empfänger (2), einen zweiten Sender (6) und einen Prozessknoten (4), welcher dazwischen verbunden ist;
wobei der erste Empfänger (1) mit dem zweiten Empfänger (2) verbunden ist und der zweite Sender (6) mit dem ersten Sender (7) verbunden ist; wobei
im Normalbetrieb
der erste Empfänger (1) adaptiert ist, Daten zu empfangen und diese Daten an beide, den zweiten Empfänger und den Verstärker zu übergeben, wobei die über den zweiten Empfänger (2) gesendeten Daten zur Verarbeitung an den Prozessknoten (4) übergeben werden, wonach
der Prozessknoten adaptiert ist, eine Antwort über den zweiten Sender (6) an den ersten Sender (7) zu übergeben, und
im Fall eines Fehlers des Slave-Knotens
der erste Empfänger (1) adaptiert ist, Daten zu empfangen und diese Daten direkt über das Verstärkermodul an den ersten Sender (7) zu übergeben, und dadurch den Slave-Knoten zu umgehen,
wobei der Verstärker einen Wächter (5) umfasst, welcher adaptiert ist, die Funktion des Prozessknotens zu überwachen und den Verstärker zu aktivieren, wenn er erkennt, dass der Prozessknoten nicht funktioniert.

2. System nach Anspruch 1, wobei der Wächter (5) einen Countdown-Timer aufweist, welcher adaptiert ist, durch ein Signal aus dem Prozessknoten (4) zurückgesetzt zu werden, wobei der Wächter adaptiert ist, den Verstärker (3) zu aktivieren, wenn der Countdown abläuft.

3. System nach Anspruch 1 oder 2, wobei im Normalbetrieb der erste Empfänger (1) adaptiert ist, Daten zu empfangen und diese Daten an beide, den zweiten Empfänger (2) und den Verstärker (3) zu übergeben.

4. System nach einem der vorstehenden Ansprüche, welches in einem Steuerungssystem für eine Unterwasser-Einrichtung eines Kohlenwasserstoffbohrlochs verwendet wird.

5. Verfahren zum Senden von Daten, wobei das Verfahren das Beliefern von Daten an ein aktives Bypass-System umfasst, wobei das aktive Bypass-System umfasst:
ein aktives Bypass-Modul, umfassend einen ersten Empfänger (1), welcher mit einem ersten Sender (7) verbunden ist, und einen Verstärker (3), welcher zwischen dem ersten Empfänger und dem ersten Sender verbunden ist; und
einen Slave-Knoten, umfassend einen zweiten Empfänger (2), einen zweiten Sender (6) und einen Prozessknoten (4), welcher dazwischen verbunden ist;
wobei der erste Empfänger mit dem zweiten Empfänger verbunden ist und der zweite Sender mit dem ersten Sender verbunden ist; wobei
das Verfahren im Normalbetrieb umfasst
Übergeben der von dem ersten Empfänger empfangenen Daten an beide, den zweiten Empfänger und den Verstärker, wobei die von dem zweiten Empfänger empfangenen Daten an den Prozessknoten zur Verarbeitung übergeben werden,
Übergeben einer Antwort von dem Prozessknoten an den zweiten Sender, und dann Übergeben der Antwort an den ersten Sender, und
im Fall eines Fehlers des Slave-Knotens
Übergeben der von dem ersten Empfänger empfangenen Daten direkt über das Verstärkermodul an den ersten Sender und dadurch Umgehen des Slave-Knotens,
wobei der Verstärker einen Wächter (5) umfasst, welcher die Funktion des Prozessknotens überwacht und den Verstärker aktiviert, wenn er erkennt, dass der Prozessknoten nicht funktioniert.

6. Verfahren nach Anspruch 5, wobei der Wächter (5) einen Timer aufweist, welcher durch ein Signal aus dem Prozessknoten (4) zurückgesetzt wird, wobei der Wächter den Verstärker (3) aktiviert, wenn der Countdown abläuft.

## Revendications

1. Système de dérivation active comprenant :
un module de dérivation active comprenant un premier récepteur (1) connecté à un premier émetteur (7) et à un répéteur (3) connecté entre le premier récepteur et le premier émetteur ; et
un noeud esclave comprenant un second récepteur (2), un second émetteur (6) et un noeud de traitement (4) connecté entre eux ;
le premier récepteur (1) étant connecté au second récepteur (2) et le second émetteur (6) étant connecté au premier émetteur (7) ; dans lequel :
en service normal,
le premier récepteur (1) est adapté pour recevoir des données et faire passer lesdites données à la fois au second récepteur et au répéteur, les données envoyées via le second récepteur (2) passant au noeud de traitement (4) pour un traitement, après quoi :
le noeud de traitement est adapté pour faire passer une réponse via le second émetteur (6) au premier émetteur (7) et,
dans le cas d'une défaillance du noeud esclave,
le premier récepteur (1) est adapté pour recevoir des données et faire passer lesdites données directement à travers le module répéteur au premier émetteur (7), dérivant de la sorte le noeud esclave,
le répéteur comprenant un contrôleur de séquence (5) adapté pour surveiller le fonctionnement du noeud de traitement et activer le répéteur lorsqu'il détecte que le noeud de traitement ne fonctionne pas.

2. Système selon la revendication 1, dans lequel le contrôleur de séquence (5) a une minuterie de décomptage qui est adaptée pour être remise à zéro par un signal provenant du noeud de traitement (4), le contrôleur de séquence étant adapté pour activer le répéteur (3) lorsque le décompte s'est écoulé.

3. Système selon la revendication 1 ou 2, dans lequel, en service normal, le premier récepteur (1) est adapté pour recevoir des données et faire passer lesdites données à la fois au second récepteur (2) et au répéteur (3).

4. Système selon l'une quelconque des revendications précédentes utilisé dans un système de commande pour une installation sous-marine de puits d'hydrocarbures.

5. Procédé de transmission de données, le procédé comprenant la fourniture de données à un système de dérivation active, le système de dérivation active comprenant :
un module de dérivation active comprenant un premier récepteur (1) connecté à un premier émetteur (7) et à un répéteur (3) connecté entre le premier récepteur et le premier émetteur ; et
un noeud esclave comprenant un second récepteur (2), un second émetteur (6) et un noeud de traitement (4) connecté entre eux ;
le premier récepteur étant connecté au second récepteur et le second émetteur étant connecté au premier émetteur ; dans lequel :
le procédé comprend en service normal les étapes consistant à :
faire passer des données reçues par le premier récepteur à la fois au second récepteur et au répéteur, les données reçues par le second récepteur passant au noeud de traitement pour un traitement,
faire passer une réponse du noeud de traitement au second émetteur puis faire passer la réponse au premier émetteur et,
dans le cas d'une défaillance du noeud esclave,
faire passer des données reçues par le premier récepteur directement à travers le module répéteur au premier émetteur, dérivant de la sorte le noeud esclave,
le répéteur comprenant un contrôleur de séquence (5) qui surveille le fonctionnement du noeud de traitement et active le répéteur lorsqu'il détecte que le noeud de traitement ne fonctionne pas.

6. Procédé selon la revendication 5, dans lequel le contrôleur de séquence (5) a une minuterie qui est remise à zéro par un signal provenant du noeud de traitement (4), le contrôleur de séquence activant le répéteur (3) lorsque le décompte s'est écoulé.
